# EUROPÄISCHE PATENTSCHRIFT

(11) **EP 0 654 165 B1**
(45) Veröffentlichungstag und Bekanntmachung des Hinweises auf die Patenterteilung: **02.10.1996**
(21) Anmeldenummer: 93917685.5
(22) Anmeldetag: 29.07.1993
(51) Int. Cl.: G11B 5/848, G11B 5/845

(54) **VERFAHREN ZUR HERSTELLUNG EINES MAGNETISCHEN AUFZEICHNUNGSTRÄGERS**
METHOD FOR PRODUCING A MAGNETIC RECORDING MEDIUM
METHODE DE FABRICATION D'UN SUPPORT D'ENREGISTREMENT MAGNETIQUE

(30) Priorität: 07.08.1992 DE 4226139; 07.08.1992 DE 4226138
(43) Veröffentlichungstag der Anmeldung: 24.05.1995
(73) Patentinhaber: BASF Magnetics GmbH, 68165 Mannheim (DE)
(72) Erfinder: PERTZSCH, Albert, D-8000 München 71 (DE); KRAETSCHMER, Reinhard, D-8910 Landsberg (DE); BREITSAMETER, Michael, D-8000 München 70 (DE); RIEGER, Siegfried, D-8038 Groebenzell (DE)
(74) Vertreter: Karau, Wolfgang, Dr.
(86) Internationale Anmeldenummer: EP9302017
(87) Internationale Veröffentlichungsnummer: WO9403890

(56) Entgegenhaltungen:
- EP-A- 0 392 810
- CH-A- 493 282
- FR-A- 2 321 742
- US-A- 5 072 688

## Beschreibung

Die Erfindung betrifft ein Verfahren zum Auftragen einer oder mehrerer magnetisierbarer übereinanderliegender Schichten auf einen flexiblen unmagnetischen Schichtträger mittels eines Extrudergießers mit mindestens zwei Gießerschlitzen.

Für den Auftrag solcher magnetisierbarer Schichten gibt es mehrere Methoden. Eine die magnetischen Pigmente enthaltende Dispersion kann mittels Tauchverfahren, Messergießer, Reverse Roll Coater und auch mit Extrudergießer auf die Folie aufgebracht werden. Der Extrudergießer bietet den Vorteil eines geschlossenen rücklauffreien Systems, das die notwendigen Sauberkeitsanforderungen für die Herstellung eines modernen Hochleistungs-Magnetbandes erfüllt.

Extrudergießer zum gleichzeitigen Auftragen zweier übereinanderliegender Schichten wurden bereits in den Patentschriften EP 0 392 810, DE 40 11 279 und US 5 072 688 beschrieben. Hier fließen zwei verschiedene Dispersionen innerhalb des Gießerblocks übereinander und treten als Doppelschicht ohne Vermischung aus der Extruderöffnung heraus direkt auf den sich an der Extruderoffnung frei vorbeibewegenden Schichtträger. Die Schicht füllt den Zwischenraum zwischen Träger und Gießeröffnung aus. Die Konstanz der Naßschichtdicke über Bahnbreite und -länge wird durch die Gleichmäßigkeit von Dosiermenge und Schichtträgerlauf gesteuert. Durch die systembedingten Schwankungen dieser Eigenschaften können Abweichungen in der Naßschichtdicke bis zu mehreren µm auftreten, was bei Naßschichtdicken von ca. 10 µm, wie sie für moderne Magnetbänder benötigt werden, bei weitem zu hoch ist.

Es wurde weiterhin ein Extrudergießverfahren in der DE 19 07 212 beschrieben, das den Einfluß des schwankenden Folienandrucks dadurch vermeidet, daß der Schichtträger in einem Abstand von ca. 1 mm von der Extruderöffnung über den Pol eines Magneten geführt wird. Die aus der Extruderöffnung austretende magnetische Dispersion wird durch die Wirkung der unmittelbar hinter der Folienbahn befindlichen Magnetkante an die Folie herangezogen. Die Dickengleichmäßigkeit über die Breite hängt in diesem Fall immer noch von der mit Schwankungen verbundenen Konstanz der Dosiermenge ab. Bei Einsatz von Präzisionsdosierpumpen reduziert sich das Problem auf die Konstanz der Fördermenge über die Bahnbreite. Außerdem ist bei der beschriebenen Vorrichtung lediglich der Guß einer Einzelschicht möglich.

Zusätzlich besteht bei der Herstellung von magnetischen Aufzeichnungsträgern die Aufgabe, die Beschichtung mit den magnetischen Dispersionen über die Breite des Schichtträgers gleichmäßig zu erstrecken, um so an den Rändern der Folien Schichtverdickungen, verursacht durch die Kohäsionskräfte der Dispersionen, zu vermeiden. Dies kann beispielsweise dadurch geschehen, daß an den Gießkanten Abstreifbürsten vorgesehen sind, eine andere Lösung besteht nach der Lehre der DE 29 36 035 darin, unmittelbar nach Auftrag der magnetischen Dispersion auf den Schichtträger an den Begußrändern magnetische Kreise anzuordnen, welche unter einem Winkel zwischen Begußrand und Spaltmittellinie zwischen 0,5 bis 10° eingestellt sind. Diese Vorrichtungen erfordern einen nennenswerten technischen Aufwand und müssen außerdem ständig gewartet werden, um die Konstanz des Randbegusses einzuhalten und zu überwachen.

In der FR 2 321 742 ist ein Verfahren zur Herstellung von mehrschichtigen magnetischen Aufzeichnungsträgern beschrieben, wobei zwischen voneinander beabstandeten Beschichtungseinrichtungen Schlitzdüsen zum Absaugen der in der magnetischen Dispersion enthaltenen Lösungsmittel oder zum Einblasen von Luft zur Vermeidung des Unterschichtens mit Lösemittel angebracht sind.

Aufgabe der Erfindung war es nun, ein Verfahren zur Verfügung zu stellen, das in der Lage ist, besonders bei hohen Beschichtungsgeschwindigkeiten
- eine oder mehrere Schichten gleichzeitig aufzutragen, von denen mindestens eine Schicht magnetische Pigmente enthält
- eine Konstanz der Naßschichtdicke über die gesamte Gießbreite von ≤ 0,5 µm zu gewährleisten, relativ unabhängig von Einflüssen der Dosiermenge und der Rheologie.

Weiterhin bestand die Aufgabe, ein Verfahren der oben genannten gattungsmäßigen Art zu finden, bei dem an den Gußrandern keine oder höchstens eine minimale Schichtverdickung ohne zusätzliche Maßnahmen an der bereits begossenen Bahn aufweist.

Diese Aufgaben wurden erfindungsgemäß gelöst mit einem Verfahren zum Auftragen einer oder mehrerer magnetisierbarer übereinanderliegender Schichten auf einen flexiblen unmagnetischen Schichtträger mittels eines Extrudergießers mit mindestens zwei Gießerschlitzen, wobei die Oberkante der oberen, in Transportrichtung des Schichtträgers angeordneten Austrittsöffnung gegenüber der Unterkante der unteren Austrittsöffnung zurückgesetzt ist, wobei hinter dem Schichtträger parallel zu diesem ein quaderförmiger Magnet angeordnet ist, dessen obere Kante der gemeinsamen Austrittsöffnung der Gießerschlitze in einem Abstand von 0,1 bis 5 mm gegenübersteht, wobei an beiden Gießrändern eine Abstreifplatte angebracht ist, welche im wesentlichen senkrecht zur Austrittsöffnung verläuft, wobei die ablaufende Gießdispersion entlang der Innenfläche der Abstreifplatte abläuft und wobei die Abstreifplatte um einen Betrag über die untere beziehungsweise obere Extruderkante hinaus in Richtung der Materialbahn verlängert ist.

Nähere einzelheiten der Erfindung gehen aus den Zeichnungen, der Beschreibung und den Unteransprüchen hervor.

Nachfolgend wird die Erfindung anhand der Zeichnungen näher erläutert und zwar zeigt
- Figur 1: einen Doppelspalt-Extrudergießer.
- Figur 2: eine perspektivische Darstellung eines Teils des Extrudergießers mit Abstreifplatte
- Figur 3: eine entsprechende Draufsicht auf den Gießer mit Abstreifplatte mit ablaufender Dispersion und Materialbahn.

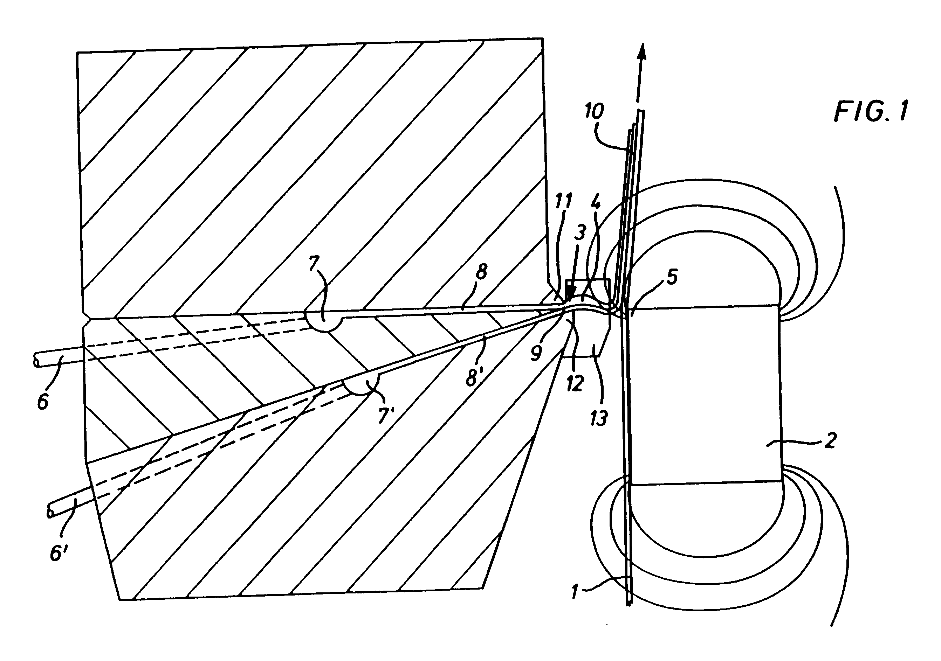

Die Erfindung wird nun im einzelnen zunächst anhand der Figur 1 am Beispiel eines Doppelspalt-Extrudergießers beschrieben.

Der zu beschichtende Schichtträger 1 wird so geführt, daß er dabei mit der Rückseite über die Polfläche eines Magneten 2 gleitet. Die Gießöffnung 3 des Extrudergießers befindet sich gegenüber der oberen Kante 5 des Magneten und ist mit ihrem Spalt etwa senkrecht gegen den Schichtträger 1 gerichtet.

Mittels (nicht dargestellter) Präzisionsdosierpumpen werden die Gießdispersionen in die Gießerkanäle 6, 6' gefördert, deren Anzahl sich nach der maximalen Zahl der aufeinanderzugießenden Schichten richtet. Die Dispersionen fließen in die Verteilungskammern 7, 7', in denen die Dispersionen auf die Bahnbreite, welche 500 - 1000 mm je nach Beschichtungsanlage betragen kann, verteilt werden. Diese Kammern stellen zusätzlich ein gewisses Puffervolumen von je etwa 5 - 100 ml dar, um Druckschwankungen in den sich anschließenden Gießerschlitzen 8, 8' auszugleichen. Die Gießerschlitze der verschiedenen Dispersionen vereinigen sich kurz vor der Gießeröffnung 3. An der Vereinigungsstelle 9 fließen die Dispersionen in der gewollten Schichtfolge aufeinander, ohne sich an den Grenzflächen zu vermischen. Das Verhältnis der Naßschichtdicken der einzelnen Schichten wird durch die jeweilige Dosiergeschwindigkeit geregelt. Die Gießeröffnung 3 beim Austritt aus dem Schlitz hat eine Weite im Bereich von 0,2 - 0,8 mm.

Erfindungsgemäß ist die Oberlippe 11 der Austrittsöffnung 3 des Extruders gegenüber der Unterlippe 12 zurückgesetzt. Es wurde nämlich gefunden, daß dadurch die Gußstabilität erhöht wird. Der waagrechte Abstand der Oberlippe zur Unterlippe liegt im Bereich von 0,5 bis 1,5 mm. Die dort austretende Einfach- oder Mehrfachschicht 10 ist dem Einfluß des Magnetfeldes der Magnetkante 5 ausgesetzt. Der Magnet 2 selbst, ein Permanent- oder Elektromagnet, hat eine rechteckige Form, dessen ebene Polflächen durch geradlinige Kanten begrenzt sind. über die eine Polfläche des Magneten gleitet der zu beschichtende Schichtträger 1, und die Extruderöffnung 3 befindet sich gegenüber der oberen Kante 5 der Polfläche. Da sich die magnetische Kante 5 hinter dem Schichtträger 1 befindet, lassen sich große Kräfte auf die magnetische Dispersion ausüben, ohne daß der Magnet den Beschichtungsprozeß stört. An der Kante 5 ist das Feld am dichtesten, wobei ein Feldgradient von mehr als 400 A/cm vorhanden ist. Dieser Gradient ist auf den Extruderspalt gerichtet und besitzt eine gräftekomponente entgegen der Laufrichtung des Schichtträgers. Dadurch entsteht die Ausbildung eines Flüssigkeitspolsters 4 sowie dessen Stabilisierung. Erst hierdurch wird es möglich, sehr dünne Schichten zu gießen und den Meniskus unempfindlich gegen Störkräfte zu machen, die beispielsweise von der elektrostatischen Aufladung des Schichtträgers herrühren können. Wie aus dem Feldlinienverlauf der Figur 1 weiterhin hervorgeht, wird der Schichtträger so geführt, daß sich die magnetische Dispersion 10 beim Ablaufen von der Magnetkante in einem magnetischen Langsfeld befindet. Das Langsfeld hat eine Stärke von 80 bis 400 A/cm und bewirkt eine äußerst erwünschte Vorausrichtung der magnetischen Teilchen. Zur Verringerung der Randeinschnürung des Begusses können in einer bevorzugten Ausführungsform auf beiden Gießrändern weiter unten noch näher zu beschreibende Abstreifplatten 13 angeordnet sein, welche den Abstand der frei fließenden Dispersionen zum Schichtträger erheblich verringern.

Der Abstand der.Extruderöffnung 3 von der Trägerbahn 1 beträgt 0,1 - 5 mm, vorzugsweise 1 - 1,5 mm. Die aus der Extruderöffnung 3 austretenden Dispersionsschichten 10 haben im Moment des Austritts eine gesamte Dicke von etwa 500 µm und können durch den Auftragsvorgang in Abhängigkeit von Dosier- und Foliengeschwindigkeit, welche im Bereich von 100 - 500 m/min liegt, bis zu einem Faktor 50, das heißt bis herunter zu einer Naßschichtdicke auf dem Schichtträger von 10 µm, gestreckt werden. Hierbei bleibt der Mehrfachschichtcharakter ohne Vermischung an den Grenzfläche mit den vorgegebenen relativen Einzelschichtdicken erhalten. Kurzzeitige Verdickungen, wie Folienklebestellen bei kontinuierlicher Fahrweise, können mit dieser Vorrichtung ohne Probleme bewaltigt werden. Die Konstanz der Schichtdicke über Länge und Breite ist dabei von Schwankungen der Qualität des Schichtträgers wie Dicke oder Andruck völlig unabhängig.

Inhomogenitäten von Seiten des Extrudergießers (über die Bahnbreite schwankende Dosiermenge infolge von Druck- und Geschwindigkeitsdifferenzen) können durch eine Reihe von (nicht dargestellten) Einstellschrauben, die im Abstand von etwa 50 - 100 mm angebracht sind, korrigiert werden. Die Einstellschrauben sind entlang der Gießerbreite einige Zentimeter entfernt von der Extruderöffnung angebracht. Mittels Differentialgewinde kann die Weite der Gießeröffnung beispielsweise im Bereich von 50 µm unabhängig voneinander in dem jeweiligen Teilstück variiert werden. Die die Extruderöffnung begrenzenden Gießerlippen 11, 12 besitzen in diesem Fall eine entsprechende Flexibilität, vorzugsweise durch Materialverdünnungsstellen, so daß auf diesem Wege die Schwankungen der Naßschichtdicke reduziert werden können. Eine derartige Einstellvorrichtung ist in der DE-OS 39.27 680 beschrieben.

Die Extruder-Gießvorrichtung kann aus nichtmagnetischem Stahl, Nichteisenmetallen wie zum Beispiel Bronze, Messing, Titan, oder entsprechenden Metallen oder Legierungen betehen, ebenso lösemittelbeständige Kunststoffe oder anorganische Materialien wie zum Beispiel Keramik oder Sintermaterialien. Durch geeignete Maßnahmen können zu starke Lösemittelverluste (Antrocknungen) im Bereich der Gießeröffnung, speziell im Randbereich, vermieden werden, beispielsweise durch Lösemittelanfeuchtlippen an den Kantenrändern.

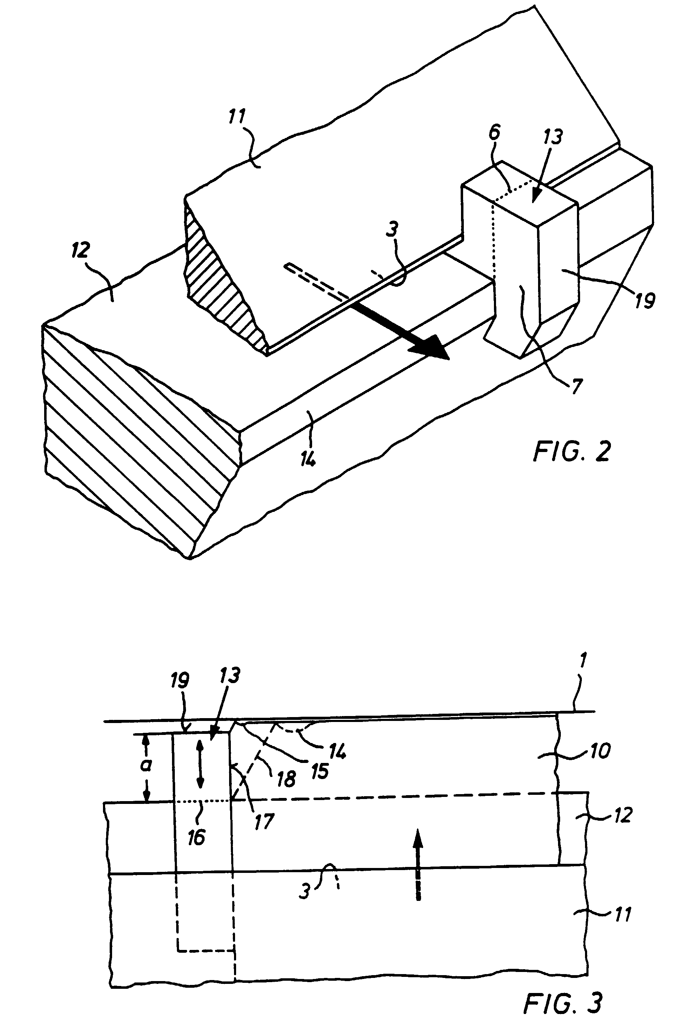

Erfindungswesentlich ist weiterhin, wie aus Figur 2 zu ersehen, daß an beiden Gießrändern eine Abstreifplatte 13 vorgesehen ist, die im wesentlichen senkrecht zur Extruderäffnung 3 und parallel zur Richtung des auslaufenden Dispersionsstroms 10 angeordnet ist. Die Innenfläche 17 der Abstreifplatte 13, an welcher der Dispersionsstrom entlang verläuft, kann parallel zum Rand der Materialbahn oder aber bis zu etwa 15° nach außen laufend gewählt sein, so daß der Winkel zwischen Extruderöffnung 3 und Innenfläche 17 zwischen 90 und 105° beträgt. Diese Abstreifplatte 13 verläuft ausgehend von der bereits beschriebenen zurückgesetzten Oberlippe 11 über die Ablaufebene 12 der vorgezogenen Unterlippe und verläuft weiter in Richtung der Materialbahn 1, wie aus der Figur 3 zu ersehen ist. Die Ablaufplatte 13 steht also an beiden Gießrändern noch über der Ebene 14 des Extrudergießers um einen gewissen Betrag (a) im Bereich von 0,3 - 1,3 mm vor.

Wäre dies nicht der Fall und würde die Abstreifplatte mit der Ebene 14 an der gepunkteten Linie 16 abschließen, so würde durch die bereits beschriebenen Kohäsionskräfte der Flüssigkeitsmeniskus 10 ausgehend vom Gießrand nach innen verlaufen, wie durch die gestrichelte Linie 18 angegeben, und es würde ein erheblicher Gießwulst 14 entstehen, welcher die nutzbare Gießbreite entsprechend verringert. Da nun aber die Abstreifplatte 13 um die Strecke (a) verlängert ist, so kann, wie aus Figur 3 ebenfalls hervorgeht, der Dis-persionsfilm nur um einen geringen Betrag nach innen laufen und es entsteht ein lediglich minimaler Gießwulst 15. Aufgrund von umfangreichen Gießversuchen der Anmelderin wurde festgestellt, daß der Abstand der parallel zur Materialbahn 1 verlaufenden äußeren Fläche 19 der Abstreifplatte 13 bis auf 0,05 bis 0,8 mm von der begossenen Materialbahn 1 verringert werden kann. Bei Passieren einer Verdickungsstelle der Materialbahn, beispielsweise einer Klebestelle, kann entweder der ganze Gießer oder gegebenenfalls die beiderseits der Gießränder angebrachte Abstreifplatte 13 in Pfeilrichtung abgeschwenkt und nach Passieren der Verdickungsstelle wieder angeschwenkt werden.

Die Abstreifplatte kann aus dem gleichen Material wie der übrige Extrudergießer bestehen, also aus nichtmagnetischem Stahl, Bronze, Messing, lösemittelfesten Kunststoffen, Keramik oder Sintermaterialien. Weiterhin können die beiderseitig angebrachten Abstreifplatten gleichzeitig Lösemittelanfeuchtlippen zum Vermeiden des Antrocknens an der Gießeröffnung enthalten.

Die Gesamt-Naßschichtdicke kann bis minimal 10 µm eingestellt werden, was ungefähr 0,2 µm Trockenschichtdicke entspricht. Das Verhältnis der Teilschichtdicken ist beliebig einstellbar. Als magnetische Dispersionen sind sämtliche bisher üblichen ohne Berücksichtigung der Viskosität geeignet. Als magnetische Pigmente können Eisenoxide, Chromdioxid, Bariumferrit und/oder Metallpulver eingesetzt werden. Auch die üblichen Bindemittel, Zusatzstoffe wie Dispergatoren, Netzmittel, Härter und Lösungsmittel sind einsetzbar.

Die Kombination von magnetisierbaren Schichten mit unmagnetischen Schichten, wie Haftschichten, Zwischenschichten, Gleitschichten, ist ebenfalls möglich. Als Schichtträger können sämtliche bisher bekannten Typen, beispielsweise Polyethylenterephthalat oder Polyethylennaphthalat, Verwendung finden.

Die Anwendung der erfindungsgemäßen Gießvorrichtung soll im folgenden durch ein praktisches Beispiel verdeutlicht werden, ohne jedoch die Erfindung darauf zu beschränken.

Die Anordnung von Gießer und Magneten entspricht hierbei der Figur 1. Das Material des Gießers ist nichtmagnetischer Stahl. Der Magnet ist ein Permanentmagnet in Form eines Mauerwerks aus einzelnen Bariumferritquadern. Die Polflächen sind mit je einer rechteckigen Weicheisenmagnetleiste abgedeckt.

### Beispiel 1

Ein als Schichtträger dienender Polyethylenterephthalatfilm einer Dicke von 15 µm wird mit magnetischen Dispersionen, welche gemäß Tabelle 1 und 2 aufgebaut sind, mittels eines erfindungsgemäßen Extruders unter den nachstehend angegebenen Produktionsbedingungen beschichtet und anschließend getrocknet, um einen magnetischen Aufzeichnungsträger herzustellen.

### Produktionsbedingungen:

Viskosität einer Beschichtungslösung für die untere Schicht: 2500 mPa x s (bestimmt mittels eines B-Typ-Viskosimeters nach einminütiger Drehung bei 360/min; gilt auch im folgenden)

Viskosität der Beschichtungslösung für obere Schicht: 4000 mPa x s.

Dicke der trockenen Schichten: 2,7 µm für obere Schicht, 3,3 µm für untere Schicht; Beschichtungsgeschwindigkeit: 350 m/min.

**Tabelle 1 -**

| untere Schicht | |
|---|---|
| Bestandteile | Gew.% |
| CrO₂ nadelförmig (H_{c} = 48 kA/m) | 100 |
| α-Fe₂O₃ | 3 |
| Polyester-Polyurethan | 17 |
| Polyvinylformal | 3 |
| Zinkstearat | 1,5 |
| Triethanoldiamindioleat | 1 |
| Tetrahydrofuran | 225 |

**Tabelle 2 -**

| obere Schicht | |
|---|---|
| Bestandteile | Gew.% |
| CrO₂ nadelförmig (37 kA/m) | 100 |
| α-Fe₂O₃ | 3 |
| Polyester-Polyurethan | 15 |
| Polyvinylformal | 2,6 |
| Zinkstearat | 1,5 |
| Triethanoldiamindioleat | 0,5 |
| Silikonöl | 0,1 |
| Tetrahydrofuran | 230 |

Es wurde ein völlig streifenfreier und schlierenfreier Beguß erhalten. Der erhaltene magnetische Aufzeichnungsträger besaß ausgezeichnete magnetische und mechanische Eigenschaften und besaß nur einen minimalen Randwulst.

## Patentansprüche

1. Verfahren zum Auftragen einer oder mehrerer magnetisierbarer übereinanderliegender Schichten auf einen flexiblen unmagnetischen Schichtträger mittels eines Extrudergießers mit mindestens zwei Gießerschlitzen (8, 8'), wobei die Oberkante (11) der oberen, in Transportrichtung des Schichtträgers angeordneten Austrittsöffnung (8) gegenüber der Unterkante (12) der unteren Austrittsöffnung (8') zurückgesetzt ist, wobei hinter dem Schichtträger (1) parallel zu diesem ein quaderförmiger Magnet (2) angeordnet ist, dessen obere Kante (5) der gemeinsamen Austrittsöffnung (3) der Gießerschlitze in einem Abstand von 0,1 bis 5 mm gegenübersteht, wobei an beiden Gießrändern eine Abstreifplatte (13) angebracht ist, welche im wesentlichen senkrecht zur Austrittsöffnung (3) verläuft, wobei die ablaufende Gießdispersion (2) entlang der Innenfläche (17) der Abstreifplatte (13) abläuft und wobei die Abstreifplatte (13) um einen Betrag (a) über die untere beziehungsweise obere Extruderkante (11, 12) hinaus in Richtung der Materialbahn (1) verlängert ist.

2. Verfahren nach Anspruch 1, dadurch gekennzeichnet, daß die Gießeröffnung (3) eine Weite im Bereich von 0,2 bis 0,8 mm besitzt und daß der Waagrechte Abstand der Oberkante (11) zur Unterkante (12) im Bereich von 0,5 - 1,5 mm liegt.

3. Verfahren nach den Ansprüchen 1 bis 2, dadurch gekennzeichnet, daß das Verstreckungsverhältnis der aus den Gießerschlitzen (8, 8') auf den Schichtträger aufgebrachten Dispersionen bis 1 : 50 beträgt.

4. Verfahren nach den Ansprüchen 1 bis 3, dadurch gekennzeichnet, daß die Größe des auf die Gießeröffnung (3) gerichteten Feldgradienten der Kante (5) des Magneten mehr als 400 A/cm beträgt.

5. Verfahren nach den Ansprüchen 1 bis 4, dadurch gekennzeichnet, daß die Feldstärke des Magneten (2) in Laufrichtung des begossenen Schichtträgers (1, 10) einen Betrag von 80 bis 400 A/cm hat.

6. Verfahren nach Anspruch 1, dadurch gekennzeichnet, daß der Winkel zwischen Gießeröffnung (3) und Innenfläche (17) der Abstreifplatte (13) zwischen 90 und 105° beträgt.

7. Verfahren nach Anspruch 1, dadurch gekennzeichnet, daß der Abstand der der Materialbahn (1) zugewandten parallel zur Gießeröffnung (3) verlaufenden Fläche (19) der Abstreifplatte (13) von der begossenen Materialbahn (19) im Bereich von 0,05 bis 0,8 mm ist.

8. Verfahren nach Anspruch 1, dadurch gekennzeichnet, daß der Abstand der Ablauffläche (14) der vorspringenden Unterlippe (12) des Extrudergießers von der begossenen Materialbahn (1) im Bereich von 1 bis 1,5 mm liegt.

## Claims

1. A process for applying one or more magnetizable layers one on top of the other to a flexible nonmagnetic substrate by means of an extrusion coater having at least two coater slots (8, 8'), wherein the upper edge (11) of the upper outlet orifice (8) arranged in the transport direction of the substrate is recessed with respect to the lower edge (12) of the lower outlet orifice (8'), a right parallelepiped magnet (2) whose upper edge (5) is opposite the common outlet orifice (3) of the coater slots at a distance of from 0.1 to 5 mm away therefrom is arranged behind the substrate (1) and parallel thereto, a stripping plate (13) which extends essentially perpendicular to the outlet orifice (3) is mounted at both coating edges, the outflowing coating dispersion (2) runs off along the inner surface (17) of the stripping plate (13), and the stripping plate (13) is extended by an amount (a) beyond the lower or upper extruder edge (11, 12) in the direction of the material web (1).

2. A process as claimed in claim 1, wherein the coater orifice (3) has a width of from 0.2 to 0.8 mm, and the horizontal distance of the upper edge (11) from the lower edge (12) is from 0.5 to 1.5 mm.

3. A process as claimed in claim 1 or 2, wherein the stretching ratio of the dispersions applied from the coater slots (8, 8') onto the substrate is up to 1 : 50.

4. A process as claimed in any of claims 1 to 3, wherein the size of the field gradient of the edge (5) of the magnet, which gradient is directed toward the coater orifice (3), is more than 400 A/cm.

5. A process as claimed in any of claims 1 to 4, wherein the field strength of the magnet (2) in the running direction of the coated substrate (1, 10) is from 80 to 400 A/cm.

6. A process as claimed in claim 1, wherein the angle between coater orifice (3) and inner surface (17) of the stripping plate (13) is from 90 to 105°.

7. A process as claimed in claim 1, wherein the distance between the surface (19) of the stripping plate (13), which faces the material web (1) and is parallel to the coater orifice (3), and the coated material web (1) is from 0.05 to 0.8 mm.

8. A process as claimed in claim 1, wherein the distance between the run-off surface (14) of the projecting lower lip (12) of the extrusion coater and the coated material web (1) is from 1 to 1.5 mm.

## Revendications

1. Procédé d'application d'une couche aimantable ou de plusieurs couches aimantables superposées sur un substrat non magnétique souple au moyen d'une extrudeuse-couleuse ayant au moins deux fentes de coulée (8, 8'), le bord supérieur (11) de l'orifice de sortie supérieur (8) étant en retrait, dans la direction de transport du substrat, par rapport au bord inférieur (12) de l'orifice de sortie inférieur (8'), derrière le substrat (1) étant placé parallèlement à celui-ci un aimant parallélépipédique (2) dont le bord supérieur (5) est en face de l'orifice de sortie commun (3) des fentes de coulée et à une distance de 0,1 à 5 mm de celui-ci, sur les deux bords de coulée étant montée une plaque racleuse (13) qui s'étend sensiblement perpendiculairement à l'orifice de sortie (3), la dispersion coulée qui s'écoule (10) s'écoulant le long de la face intérieure (17) de la plaque racleuse (13), et la plaque racleuse (13) étant rallongée d'une quantité (a) au-delà du bord d'extrusion inférieur ou supérieur (11, 12) en direction de la bande de matériau (1).

2. Procédé selon la revendication 1, caractérisé par le fait que l'orifice de coulée (3) a une largeur de 0,2 à 0,8 mm et la distance horizontale entre le bord supérieur (11) et le bord inférieur (12) est de 0,5 à 1,5 mm.

3. Procédé selon les revendications 1 et 2, caractérisé par le fait que le rapport d'étirage des dispersions appliquées des fentes de coulée (8, 8') sur le substrat va jusqu'à 1/50.

4. Procédé selon les revendications 1 à 3, caractérisé par le fait que le gradient de champ dirigé vers l'orifice de coulée (3) du bord (5) de l'aimant est supérieur à 400 A/cm.

5. Procédé selon les revendications 1 à 4, caractérisé par le fait que l'intensité du champ de l'aimant (2) dans la direction de défilement du substrat couché (1, 10) est de 80 à 400 A/cm.

6. Procédé selon la revendication 1, caractérisé par le fait que l'angle entre l'orifice de coulée (3) et la face intérieure (17) de la plaque racleuse (13) est compris entre 90 et 105°.

7. Procédé selon la revendication 1, caractérisé par le fait que la distance entre la face (19) de la plaque racleuse (13) dirigée vers la bande de matériau (1) et parallèle à l'orifice de coulée (3) et la bande de matériau couchée (1, 10) est de 0,05 à 0,8 mm.

8. Procédé selon la revendication 1, caractérisé par le fait que la distance entre la surface d'écoulement (14) de la lèvre inférieure saillante (12) de l'extrudeuse- couleuse et la bande de matériau couchée (1) est de 1,0 à 1,5 mm. .
